# EUROPEAN PATENT SPECIFICATION

(11) **EP 1 235 502 B1**
(45) Date of publication and mention of the grant of the patent: **01.09.2004**
(21) Application number: 00984618.9
(22) Date of filing: 08.12.2000
(51) Int. Cl.: A47G 21/18, B01D 35/02

(54) **DRINKING STRAW**
TRINKHALM
PAILLE A BOIRE

(30) Priority: 08.12.1999 AU PQ743099
(43) Date of publication of application: 04.09.2002
(73) Proprietor: Aqua Research Pty Ltd, Davidson, NSW 2085 (AU)
(72) Inventor: Mikaelian, Razmik, Davidson, NSW 2085 (AU); Chiba, Akira, Davidson, NSW 2085 (AU)
(74) Representative: Ganahl, Bernhard
(86) International application number: PCT/AU2000/001519
(87) International publication number: WO 2001/041607

(56) References cited:
- WO-A-91/03427
- WO-A-97/38941
- WO-A-98/15342
- WO-A-99/29394
- WO-A-99/36152
- JP-A- 1 007 907
- JP-A- 4 322 783
- US-A- 4 531 954
- US-A- 4 636 307
- US-A- 5 156 335
- US-A- 5 456 831
- US-A- 5 509 605
- US-A- 5 518 613
- US-A- 5 545 315
- US-A- 5 609 759
- US-A- 5 653 878
- US-A- 5 681 463
- US-A- 5 928 512

## Description

### FIELD OF THE INVENTION

The present invention relations to a liquid filtration drinking straw. Particularly, the invention relations to the filtration of drinking fluid using hollow fibre membranes, or more particularly a plurality of hollow fibre membranes contained within, attached to or part of a drinking straw.

### BACKGROUND ART

In many areas around the world water carries significant amounts of particulate matter which may present a serious health problem when the water is used as a drinking supply. Many water supplies require treatment to make them drinkable. Common types of disinfectants used today, especially by travellers going to countries which have a water quality that may present a health problem, are chemicals such as chlorine and iodine. The use of chlorine or iodine to disinfect water is time consuming, clearly inadequate in dealing with the new complex microbiological entities that exist in water, and these agents themselves may cause health problems. Harmful organisms such as Giadia and cryptosporidium are difficult to eradicate with conventional water treatment procedures.

Equipment used to treat drinking water includes different types of filter media disposed in a fluid line; for example, activated carbon or zinc and copper. However, an activated carbon filter is not capable of reducing certain bacteria such as e.Coli and pseudomonas. Furthermore, zinc and copper filters cannot substantially eliminate bacteria in unchlorinated water.

US 5,688,588 discloses a drinking straw that includes a filter plug made of a non-woven fibrous structure. However, because of inherent limitations in the construction of a plug filter per se the drinking straw is ineffective in filtering out smaller bacteria. Table 1 of US 5,688,588 confirms this, wherein a log reduction of 2.5 means that around 0.5% of bacteria still passes through the straw, with potentially fatal or severe consequences.

US 5,681,463 discloses a filtering cartridge 16 which is screwed down over a bottle 10. The filtering member includes a housing 18, in which is positioned an activated carbon tube, which in turn surrounds a hollow fibre module which is fastened in the housing 18. Thus, the invention disclosed in this document relates to an arrangement for mounting on bottles.

US 4,636,307 discloses a hollow fibre filtering module for positioning in a water purifying device. The device is intended as a permanent installation and does not have portable characteristics.

JP 63-287593 discloses a straw-type water purifier. A module case 2 is mounted within a main body case 3. The module case 2 has a number of hollow thread membranes which are closed at their lower end by a pre-filter 4. The arrangement is somewhat cumbersome in that a packing seal 11 is required at a lower end of the straw to seal the module case in place and to prevent water from passing between the main body case 5 and the module case 2. If the packing seal 11 were to fail, then a user could drink contaminated liquid with the possible risk of illness or death.

US 5,518,613 discloses a personal portable water purifying and drinking device. This device includes a conduit having a chemical purification stage positioned at one end of the conduit, and a filtration stage positioned at the opposite end of the conduit. The filtration stage includes a filter and a cleaning medium. The filter is embodied as microfiltration membrane 38 or 50 respectively. The microfiltration membrane 38 is embodied in the form of a disk and is larger then the diameter of the conduit. The other microfiltration membrane 50 has a form of about a paraboloid and is mounted a mounting points 52 to the walls of a residence chamber 26.

WO 99/29394 discloses a universal filter for soda pop and bottled water bottles. This filter comprises a housing with an elongated housing body. A carbon block filter member is provided inside of the housing body. The carbon block has a tube-like construction with a centre hole. At the lower portion of the sidewalls of the housing inlets are provided so that water flows through these inlets and passes through the tube-like carbon block filter member. The filter has a flange system for being sealingly fixed to a bottle neck. Furthermore, it is possible to add this filter to the end of a straw.

US 5,546,831 shows a device to filter water having a tubular housing with five chambers therein divided by filter members. The filter members have the form of disks. The first chamber includes a granular activated carbon filtering medium. The second chamber includes an iodinated anion resin filtering medium, the third chamber being empty, the fourth chamber includes an anion exchange filtering medium and the fifth chamber includes a granular activated carbon filtering medium.

US 5,509,605 shows a filtering straw for drawing liquid from a container. This filtering straw comprises a tube with a pair of filters, one filter being removably mounted in each end of the tube. The filters are formed from bound powdered material. Each of the filters includes a portion extending into the corresponding end of the tube, each of which has an outer circumferential liquid permeable surface cooperating with the inner circumferential surface of the tube to define an annular chamber therebetween. Accordingly the cross sectional area through which fluid is drawn by sucking on the straw is the circumferential surface of each filter.

JP 04/322783 shows a water-purifying cartridge. This cartridge forms part of a housing for a water filtration installation. The cartridge comprises a bundle of hydrophilic porous hollow fibres which transmit water but no air, while the end of the bundle is embedded and fixed to a potting material. A hydrophobic porous material fibre which transmits air but no water is wound around the bundle of hydrophilic porous hollow fibres and is embedded and fixed at its end part to the potting material. Thereby the hydrophobic material fibre discharges air, which prevents outward expansion of the bundle of the fibres.

JP 01-007907 relates to a separation membrane module for removing substances from an aqueous solution. This module comprises hydrophilic hollow yarns consisting of a hydrophilic material such as polyether sulfon. Furthermore, this module comprises hydrophobic hollow yarns consisting of hydrophobic material such as polypropylene. When liquid is treated with this module the air initially present in the module permeates through the hydrophobic membrane and the aqueous solution permeates through the hydrophilic membrane. Thus, the air does not reduce the effective area of the hydrophilic membrane.

It would be advantageous if at least preferred embodiments of the present invention overcame or substantially ameliorated at least one of the above disadvantages and/or more generally, provided an improved drinking straw.

### SUMMARY OF THE PRESENT INVENTION

The present invention provides a drinking straw for the drinking of liquid comprising:
- a mouthpiece having an outlet that is shaped for positioning in the mouth of a drinker of the liquid;
- a hollow conduit integral with or mounted to the mouthpiece and extending downwardly therefrom in use;
- a head mounted within and extending completely across the conduit; and
- a plurality hollow fibre membranes, each membrane formed separately to the head, each membrane having an open end that is incorporated into and supported in the head, each membrane extending away from the head for positioning in the liquid, and each membrane defining a chamber therewithin;
wherein, when each membrane is positioned in the liquid and the drinker applies a suction force to the outlet, liquid passes across the membrane and into the chamber and is filtered thereby, and then passes from the chamber via the open end to the outlet.

By employing hollow fibre membranes, very fine (e.g. microfiltration) membrane materials can be employed, without a restricting or limiting pressure drop (i.e. the membrane can be made relatively thin). Such fine filtration characteristics cannot be achieved with filter plugs because, with reduced pore size, the pressure drop becomes too excessive across the plug. Hollow fibre membranes are also highly efficient at filtration and are easily arranged within the conduit.

The mouthpiece is typically a separate part.

Preferably the membranes have a predetermined pore size or sizes for filtering varying sizes of particulate matter in the liquid to be drunk. Typically the pore size of the filtration membranes is sufficiently small to filter out particles at a micro level (e.g. less than 0.5µm) and even to an ultra filtration level (e.g. less than 0.05µm and down to 0.02µm).

Preferably the outlet surrounds or is located at the head.

Preferably the membranes are mounted within the conduit which provides a protective sleeve for the membranes.

As a further option, a carbon filter (e.g. manufactured from activated carbon) can be arranged at the mouthpiece such that liquid passing out of the membranes passes through the carbon filter. The carbon filter helps remove organics, some of which can pass through very fine pore-size filters. However, organics are generally of less concern than living organisms such as bacteria.

Preferably the open end of each membrane is fasteningly supported in the head, and preferably the head is a bung fastened in the conduit adjacent to the outlet.

Preferably each hollow fibre membrane projects freely from the head either in a closed loop with opposite open ends supported in the head, or as a strand having a single open end supported in the head and a closed opposite remote end.

The present invention therefore provides a drinking straw adapted for the filtration of liquids, especially water, such that the liquid after passing through the hollow fibre membranes is delivered filtered and purified to a person's mouth.

### BRIEF DESCRIPTION OF THE DRAWINGS

Notwithstanding any other forms which may fall within the scope of the present invention, preferred forms of the invention will now be described, by way of example only, with reference to the accompanying drawings in which:
Figure 1 is a plan view of a preferred drinking straw in accordance with the present invention;
Figure 2 is a cross-sectional size view of the drinking straw shown in Figure 1 taken along line C-C;
Figure 3 is a schematic cross-sectional side view of a hollow fibre filtration element for use in a straw in accordance with the present invention;
Figure 4 is a cross-sectional plan view taken along line D-D in Figure 2;
Figure 5 is a plan view of an alternative drinking straw in accordance with the present invention;
Figure 6 is a cross-sectional side view of the drinking straw of Figure 5 showing a mouthpiece fitted to the end of the straw;
Figure 7 is a cross-sectional side view of a further alternative drinking straw in accordance with the present invention with a mouthpiece fitted to the end of the straw; and
Figure 8 is a schematic cross-sectional side view, similar to Figure 3, but of an alternative hollow fibre filtration element for use in a straw in accordance with the present invention.

### MODES FOR CARRYING OUT THE INVENTION

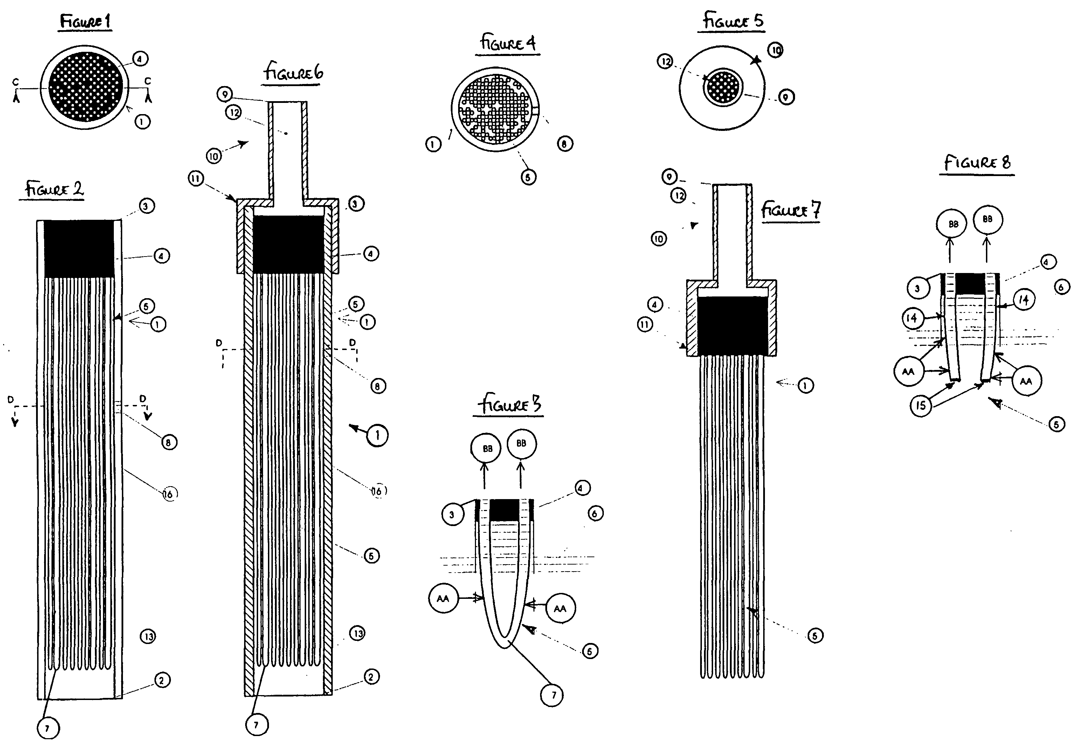

Referring to the drawings, in Figures 1 and 2 a drinking straw 1 comprises a tube 16 having an open suction end 2 and an opposing mouth end 3, with a passageway 13 therebetween. A sealing head in the form of a bung 4 is positioned in passageway 13 to close mouth end 3, and a filtration element 5 extends therefrom. The element 5 is a filter made of a plurality of hollow fibre membranes 7, disposed within the tube 16, typically such that the two open ends of each fibre strand 7 are incorporated and supported in the bung 4.

Referring now to Figures 3 and 8, it can be seen schematically how liquid travels across and into each fibre 7 as indicated by arrows AA and is delivered to a drinker's mouth at the open end(s) of each fibre at end 3 of the straw. Thus, suction or negative pressure is created in the straw 1 by a drinker's back-suction (indicated by arrows BB) and this causes the liquid to pass across the membrane wall and into an interior (chamber) thereof and then out of the open end(s) to a user's mouth. The individual fibres 7 are typically formed of polyethylene, polypropylene or the like (as described below). Also, in Figure 8, instead of a plurality of loops of hollow fibre membrane, a plurality of individual strands 14 are provided, each having a closed (sealed) end 15.

In use, the fibres 7, 14 are partly or wholly submerged within a liquid 6 requiring filtration such that when a suction force is applied to the straw, the liquid passes through the pores of the fibre 5 leaving some (typically most) or preferably all of the solids, impurities, organisms, organics, etc. in or on the pores of the fibre.

As appropriate, bung 4 can support or be defined by a porous carbon filter (typically employing activated carbon) to filter out any organics and the like in the liquid.

Referring now to Figures 5 and 6, where like reference numerals are used to denote similar or like parts, the drinking straw 1 includes a mouthpiece 10 having a protrusion 9 shaped such that it fits comfortably in a user's mouth. The mouthpiece includes a passageway 12 therethrough. An opposing skirt 11 is shaped such that it fits over the end 3 of the tube 16 but so as not to block the open ends of the fibres. The mouthpiece 10 may be permanently attached to the straw 1 or can be removed manually as required, such as by unscrewing (e.g. for use of the straw by different persons). Alternatively, the straw itself may be formed (e.g. moulded) as a single piece to include the shape of the mouthpiece.

The bung 4 is arranged so as to dispose the filter 5 in a selected area of the straw 1, and only permits the passage through the straw of filtered liquid 6 via the pores of the filter 5. Thus, the filtered liquid only exits through the open ends of the membrane and does not otherwise traverse the bung 4.

The tube 16 can also be provided with one or more holes 8 to allow the passage of air out of the straw, to prevent pressure build-up in the interior of the tube 16, created when submersing and then sucking at the drinking straw 1 in the liquid to be filtered.

Referring now to Figure 7, where like reference numerals denote similar or like parts, the bung 4 is now positioned solely in skirt 11 of mouthpiece 10. In this case, tube 16 is omitted and the filtration element 5 (being a filter made of a plurality of hollow fibre membranes) hangs freely in the drinking straw (either as loops 7 or strands 14). However, chambers into which filtered liquid passes are defined on the other side of such membranes.

In addition to employing hollow fibre membranes, flat filter membranes can be employed (eg. at intervals within tube 16 or at the underside of bung 4, mouthpiece 10 etc), but so as to define a cavity on the other side thereof into which filtered liquid flows before exiting the straw.

The external surface of tube 16 or mouthpiece 10 can be provided with appropriate embossments, protrusions, threading etc which enable the straw to be fitted to an outlet of a container, flask, bottle or other vessel holding a liquid requiring filtering. Such fitting can be snap or interference fitting, screw fitting, friction fitting etc. When the tube or mouthpiece is to be fitted to an externally threaded outlet of a flask, bottle or the like, it can include an integral annular skirt that is internally threaded for mating with the outlet thread. In this case, the tube or mouthpiece would project into the outlet whilst the annular skirt would surround the outlet and mate therewith.

Many other modifications and alterations are included within the scope of the present invention. For example, the drinking straw may be provided with two sealing means (bungs) placed at each end of the straw.

Also, the drinking straw may be provided with the hollow fibre membranes located partly or wholly outside the tube 16 (see eg. Figure 7). The suction end can also have one or more passages laterally disposed or protruding from the side wall of the straw (e.g. for simultaneous use by multiple users).

Typically, the hollow fibre membranes are ultra micro-filtration membranes formed from polyethylene (or similar) in a melt spinning and drawing process, such as those produced by Mitsubishi Rayon Co. Ltd. Such membranes have a pore size located between the micro filtration range (0.02µm - 5µm) and the ultra filtration range (2nm - 0.05µm) and can filter out fine particles and all bacteria including colloidal silica, bacterial virus, oil emulsions, latex emulsions, cholera bacillus, typhoid bacillus, Escherichia coli, staphylococcus, cryptosporidium, Giardia and Echinococcus granulosus. Typically, such membranes are also treated to be hydrophilic (e.g. covered with a hydrophilic polymer) so as to be wettable in water.

Whilst the invention has been described with reference to a number of preferred embodiments, it should be appreciated that the invention can be embodied in many other forms within the scope of the claims.

## Claims

1. A drinking straw (1) for the drinking of liquid (6) comprising:
- a mouthpiece (10) having an outlet (9) that is shaped for positioning in the mouth of a drinker of the liquid;
- a hollow conduit (16) integral with or mounted to the mouthpiece (10) and extending downwardly therefrom in use;
- a head (4) mounted within and extending completely across the conduit (16); and
- a plurality of hollow fibre membranes (7,14), each membrane (7,14) formed separately to the head (4), each membrane having an open end that is incorporated into and supported in the head (4), each membrane extending freely away from the head (4) for positioning in the liquid, and each membrane defining a chamber therewithin;
wherein, when each membrane is positioned in the liquid (6) and the drinker applies a suction force to the outlet (9), liquid passes across the membrane and into the chamber and is filtered thereby, and then passes from the chamber via the open end to the outlet (9).

2. A straw as claimed in claim 1, wherein the outlet (9) surrounds or is located at the head (4).

3. A straw as claimed in claim 1 or 2, wherein the open end of each membrane (7,14) is fastened within the head (4).

4. A straw as claimed in any one of the preceding claims wherein the head (4) is a bung fastened in the conduit (16) adjacent to the outlet (9).

5. A straw as claimed in any one of the preceding claims, wherein each membrane (7,14) projects freely from the head (4), either as a closed loop (7) with opposite open ends mounted within the head, or as a strand (14) having a single open end mounted within the head and a closed opposite remote end.

6. A straw as claimed in any one of the preceding claims, wherein the conduit (16) surrounds the membranes (5) for a length thereof, the conduit having an open in-use lower end (12) through which liquid is drawn into the straw.

7. A straw as claimed in any one of the preceding claims, wherein a carbon filter is arranged at the mouthpiece (10), such that liquid passing out of the open end of the membranes passes through the carbon filter.

8. A straw a claimed in any one of the preceding claims wherein the head (4) is defined by a carbon filter.

9. A straw as claimed in any one of the preceding claims wherein an external surface of the mouthpiece (10) or conduit (16) is shaped to enable the straw to be fitted in an outlet of a container, flask, bottle or vessel.

## Patentansprüche

1. Trinkstrohhalm (1) zum Trinken einer Flüssigkeit (6) umfassend:
- ein Mundstück (10) mit einem Auslass (9), der zum Anordnen im Mund eines Trinkers der Flüssigkeit geformt ist;
- eine hohle Rohrleitung (16), die einstückig mit oder an dem Mundstück (10) befestigt ist und sich hiervon bei Gebrauch nach unten erstreckt;
- einen Kopf (4), der innerhalb der Rohrleitung (16) angeordnet ist und sich vollständig quer zur Rohrleitung (16) erstreckt; und
- mehrere hohle Fasermembrane (7, 14), wobei jede Membran (7, 14) separat vom Kopf (4) ausgebildet ist, jede Membran ein offenes Ende aufweist, das in den Kopf (4) eingebracht darin gehalten wird, jede Membran sich frei vom Kopf (4) weg erstreckt, um in der Flüssigkeit angeordnet zu sein und jede Membran eine Kammer darin begrenzt;
wobei, wenn jede Membran in der Flüssigkeit (6) angeordnet ist und der Trinker eine Saugkraft and den Auslass (9) anlegt, Flüssigkeit durch die Membran in die Kammer hindurch tritt und hierbei gefiltert wird und dann von der Kammer über das offene Ende zum Auslass (9) gelangt.

2. Strohhalm, wie er in Anspruch 1 beansprucht wird, wobei der Auslass (9) den Kopf (4) umgibt oder am Kopf (4) angeordnet ist.

3. Strohhalm, wie er in Anspruch 1 oder 2 beansprucht wird, wobei das offene Ende einer jeden Membran (7, 14) am Kopf (4) befestigt ist.

4. Strohhalm, wie er in einem der vorhergehenden Ansprüche beansprucht ist, wobei der Kopf (4) ein in der Rohrleitung (16) benachbart zum Auslass (9) angeordneter Pfropfen ist.

5. Strohhalm, wie er in einem der vorhergehenden Ansprüche beansprucht ist, wobei jede Membran (7, 14) frei vom Kopf (4) entweder in einer geschlossenen Schleife (7) mit gegenüber liegenden offenen, im Kopf befestigten Enden oder als Strang (14) mit einem einzigen im Kopf befestigten offenen Ende und einem gegenüber liegenden geschlossenen entfernten Ende erstreckt.

6. Strohhalm, wie er in einem der vorher gehenden Ansprüche beansprucht ist, wobei die Rohrleitung (16) die Membranen (5) über eine Länge davon umgibt, wobei die Rohrleitung im Gebrauch ein offenes unteres Ende (12) aufweist, durch das Flüssigkeit in den Strohhalm gesaugt wird.

7. Strohhalm, wie er in einem der vorhergehenden Ansprüche beansprucht ist, wobei ein Kohlefilter am Mundstück (10) angeordnet ist, so dass aus dem offenen Ende der Membranen austretende Flüssigkeit durch den Kohlefilter hindurch tritt.

8. Strohhalm, wie er in einem der vorhergehenden Ansprüche beansprucht ist, wobei der Kopf (4) als Kohlefilter ausgebildet ist.

9. Strohhalm, wie er in einem der vorhergehenden Ansprüche beansprucht ist, wobei eine äußere Oberfläche des Mundstückes (10) oder der Rohrleitung (16) derart geformt ist, dass der Strohhalm in einen Auslass eines Behälters, einer Feldflasche, einer Flasche oder eines Gefäßes passt.

## Revendications

1. Paille à boire (1) pour la consommation de liquide (6) comprenant :
- un embout (10) ayant un goulot (9) conformé pour positionnement dans la bouche d'un consommateur du liquide;
- un conduit creux (16) solidaire de l'embout (10) ou monté sur celui-ci, et s'étendant vers le bas à partir de celui-ci pendant l'utilisation;
- une tête (4) montée à l'intérieur et s'étendant complètement à travers le conduit (16); et
- une pluralité de membranes fibreuses creuses (7, 14), chaque membrane (7, 14) étant formée séparément au niveau de la tête (4), chaque membrane ayant une extrémité ouverte, intégrée et soutenue dans la tête (4); chaque membrane s'écartant sans restrictions de la tête (4) pour se positionner dans le liquide, et chaque membrane définissant une chambre à l'intérieur de celui-ci;
dans laquelle, lorsque chaque membrane est positionnée dans le liquide (6) et que le consommateur applique une force d'aspiration au goulot (9), le liquide traverse la membrane et parvient dans la chambre, pour y être filtré, avant de passer de la chambre au goulot (9) à travers l'extrémité ouverte.

2. Paille selon la revendication 1, dans laquelle le goulot (9) entoure la tête (4) ou bien est situé au niveau de celle-ci.

3. Paille selon la revendication 1 ou 2, dans laquelle l'extrémité ouverte de chaque membrane (7, 14) est fixée à l'intérieur de la tête (4).

4. Paille selon l'une quelconque des revendications précédentes, dans laquelle la tête (4) est une bonde fixée dans le conduit (16) adjacent au goulot (9).

5. Paille selon l'une quelconque des revendications précédentes, dans laquelle chaque membrane (7, 14) saille sans restrictions depuis la tête (4), soit sous forme de boucle fermée (7) avec des extrémités ouvertes opposées montées à l'intérieur de la tête, sois forme de cordon (14) ayant une simple extrémité ouverte montée à l'intérieur de la tête et une extrémité éloignée opposée fermée.

6. Paille selon l'une quelconque des revendications précédentes, dans laquelle le conduit (16) entoure les membranes (5) sur une certaine longueur de celui-ci, le conduit ayant une extrémité inférieure (12) ouverte pendant l'utilisation, à travers laquelle le liquide est aspiré dans la paille.

7. Paille selon l'une quelconque des revendications précédentes, dans laquelle un filtre de carbone est disposé au niveau de l'embout (10), de sorte que le liquide arrivant de l'extrémité ouverte des membranes traverse le filtre de carbone.

8. Paille selon l'une quelconque des revendications précédentes, dans laquelle la tête (4) est définie par un filtre de carbone.

9. Paille selon l'une quelconque des revendications précédentes, dans laquelle une surface externe de l'embout (10) ou du conduit (16) est conformé pour permettre la pose de la paille dans le goulot d'un conteneur, d'un flacon, d'une bouteille ou d'un récipient.
